**Europäisches Patentamt**

**European Patent Office**

**Office européen des brevets**

(19)

(11) Veröffentlichungsnummer: **0 281 865**
**A2**

(12)

# EUROPÄISCHE PATENTANMELDUNG

(21) Anmeldenummer: 88102798.1

(22) Anmeldetag: 25.02.88

(51) Int. Cl.⁴: **C03C 25/00**

(30) Priorität: 07.03.87 DE 3707357

(43) Veröffentlichungstag der Anmeldung:
14.09.88 Patentblatt 88/37

(84) Benannte Vertragsstaaten:
**AT BE CH DE ES FR GB GR IT LI LU NL SE**

(71) Anmelder: **Akzo N.V.**
**Postbus 186 Velperweg 76**
**NL-6800 LS Arnhem(NL)**

(72) Erfinder: **Joseflak, Christoph, Dr.**
**Volkerstrasse 3**
**D-6149 Rimbach/Odenwald(DE)**
Erfinder: **Wegerhoff, Arno, Dr.**
**Kronbergstrasse 7**
**D-8761 Wörth(DE)**

(74) Vertreter: **Fett, Günter**
**Akzo Patente GmbH Kasinostrasse 19 - 23**
**D-5600 Wuppertal 1(DE)**

(54) **Gebundene Flächengebilde aus anorganischen Fasern.**

(57) Gebundene Flächengebilde wie Gewebe, Gelege, Vliese o.dgl. aus anorganischen Fasern, nämlich Wasserglasfasern oder Kieselsäurefasern werden erhalten, indem man Wasserglasfasern zu einem Gewebe, Gelege, Vlies o.dgl. verarbeitet und die Fasern durch eine Wärmebehandlung bei Temperaturen von mindestens 50°C an den Berührungsstellen miteinander verbindet. Das so erhaltene Flächengebilde wird gegebenenfalls mit Säuren behandelt, wobei ein gebundenes Flächengebilde aus Kieselsäurefasern entsteht. Besonders vorteilhaft lassen sich Wasserglasfasern als Dispersionen in einer organischen Flüssigkeit auf nassem Wege zu einem Vlies verarbeiten, wobei dann das Verbinden der Fasern durch die Wärmebehandlung vorzugsweise unter Druck stattfindet, z.B. durch Pressen oder Ausübung von Druck mittels Walzen. Die erhaltenen Flächengebilde, insbesondere die Vliese lassen sich vorteilhaft zu Verbundkörpern weiterverarbeiten.Flächengebilde aus Wasserglasfasern lassen sich vorteilhaft bei der Reinigung von Abgasen einsetzen, die saure Bestandteile, z.B. Blausäure enthalten.

EP 0 281 865 A2

## Gebundene Flächengebilde aus anorganischen Fasern

Die Erfindung betrifft gebundene Flächengebilde wie Gewebe, Gelege, Vliese o.dgl. aus anorganischen Fasern, Verfahren zu deren Herstellung sowie die Verwendung derartiger Flächengebilde.

Es sind bereits eine ganze Reihe von Verfahren bekannt, mit denen gebundene Flächengebilde aus anorganischen Fasern wie Glasfasern, keramischen Fasern, Aluminiumoxidfasern, Siliciumdioxidfasern und dergleichen herstellen kann. All diesen Verfahren ist gemeinsam, daß man von Fasern, aus denen das Flächengebilde aufgebaut sein soll,ausgeht und unter Mitverwendung von Bindemitteln ein Flächengebilde z.B. ein Vlies herstellt. Von Nachteil bei diesen Verfahren ist, daß das Bindemittel häufig die mechanischen und elektrischen Eigenschaften des erhaltenen Flächengebildes ungünstig beeinflußt. Auch ist es meistens notwendig, neben dem Bindemittel noch weitere Zusatzkomponenten einzusetzen. So wird zum Beispiel in der DE-OS 24 54 354 ein Verfahren zur Herstellung von Glasfasermatten beschrieben, bei dem beispielsweise neben dem Bindemittel, einem Harnstoffformaldehydkondensat, noch ein kationisches oberflächenaktives Mittel eingesetzt wird. Es versteht sich von selbst, daß durch derartige Zusätze der elektrische Widerstand des Vlieses herabgesetzt wird und daß die Temperaturbeständigkeit aufgrund der Gegenwart eines aus organischen Substanzen bestehenden Zusatzmittels herabgesetzt ist.

In der japanischen Offenlegungsschrift 85/65199 wird die Herstellung von Vliesen aus Glasfasern, keramischen Fasern, Aluminiumoxidfasern, Silicafasern und dergleichen beschrieben, wobei als Bindemittel in faseriger Form vorliegende Alkalimetallsalze von Titansäure eingesetzt werden. Es werden weiter Bindehilfsmittel, nämlich Quellmittel eingesetzt, wie zum Beispiel Bentonit.

Neben den Nachteilen, welche bei der Verwendung von Bindemitteln und Zusatzmitteln auftreten, ist bei Verfahren der vorstehend erwähnten Art zu bemängeln, daß die Vliese häufig zu voluminös ausfallen und daß es äußerst schwierig ist, dünne und sehr dünne Vliese zu bekommen.

In der DE-PS 2 900 990 findet sich der Hinweis, daß sowohl die dort beschriebenen Wasserglasfasern als auch die daraus erhältlichen Kieselsäurefasern sich gut zu Flächengebilden verarbeiten lassen. Angaben, auf welche Weise man zu diesen Flächengebilden gelangt, werden nicht gemacht, insbesondere fehlt jeglicher Hinweis auf die Herstellung von gebundenen Flächengebilden.

Es besteht somit noch das Bedürfnis nach gebundenen Flächengebilden wie Geweben, Gelegen, Vliesen o.dgl. mit verbesserten Eigenschaften sowie nach entsprechenden Verfahren, um zu derartigen Vliesen zu gelangen.

Aufgabe der Erfindung ist es deshalb, ein Verfahren zur Verfügung zu stellen, mit dem es möglich ist, gebundene Flächengebilde aus anorganischen Fasern herzustellen, bei dem der Einsatz eines Bindemittels und von Zusatzmitteln nicht erforderlich ist und das zu Flächengebilden führt, die sich durch erhöhte Festigkeiten und guten Zusammenhalt der Fasern an den Berührungsstellen auszeichnen und die insbesondere als Vliese in dünner papierähnlicher Form hergestellt werden können, die sich durch glatte Oberflächen auszeichnen und die sich vielseitig, insbesondere auch für Verbundstoffe, vor allem für die Elektroindustrie einsetzen lassen.

Diese Aufgabe wird durch ein Verfahren zur Herstellung von gebundenen Flächengebilden wie Geweben, Gelegen, Vliesen o.dgl. aus anorganischen Fasern gelöst, das dadurch gekennzeichnet ist, daß man Wasserglasfasern zu einem Gewebe, Gelege, Vlies o.dgl. verarbeitet und die Fasern durch eine Wärmebehandlung bei Temperaturen von mindestens 50°C an den Berührungsstellen miteinander verbindet. Vorteilhafterweise wird die Wärmebehandlung zum Verbinden der Fasern bei Temperaturen von 60 bis 160°C durchgeführt.

Vorzugsweise werden trockengesponnene Wasserglasfasern verwendet. In einer besonders vorteilhaften Ausführungsform des erfindungsgemäßen Verfahrens verwendet man frisch gesponnene Wasserglasfasern.

Sehr geeignet im Rahmen der Erfindung sind Wasserglasfasern mit einem Wassergehalt von 15 - 30, insbesondere 18 bis 24 Gew.-%.

Wasserglasfasern können gemäß der Erfindung durch Legen zu einem Vlies verarbeitet werden.

In einer weiteren vorteilhaften Ausführungsform des Verfahrens gemäß der Erfindung werden Wasserglasstapelfasern als Dispersion in einer organischen Flüssigkeit auf nassem Weg zu einem Vlies verarbeitet. Die organische Flüssigkeit hat vorzugsweise einen Wassergehalt von weniger als 1 %. Als Flüssigkeiten sind Alkohole, insbesondere Äthanol sehr geeignet.

Bevorzugt werden die Wasserglasfasern durch Pressen bei Drucken von 0,2 bis 2 bar miteinander verbunden.

Die Wasserglasfasern können auch in Mischung mit anderen anorganischen Fasern in vorteilhafter Weise verarbeitet werden.

Gegenstand der Erfindung ist weiter ein Verfahren zur Herstellung von gebundenen Flächengebilden

2

wie Geweben, Gelegen, Vliesen o.dgl. aus anorganischen Fasern, das dadurch gekennzeichnet ist, daß man Wasserglasfasern nach einem Verfahren nach einem der Ansprüche 1 bis 13 zu einem Gewebe, Gelege, Vlies o.dgl. verarbeitet und die Fasern an den Berührungsstellen miteinander verbindet, das gebundene Flächengebilde zwecks Umwandlung des Wasserglases in Kieselsäure mit Säure behandelt, wäscht und trocknet. Es ist vorteilhaft, das Flächengebilde nach dem Waschen bei Temperaturen über 600°C, vorzugsweise über 800°C zu dehydratisieren.

Gegenstand der Erfindung sind weiter gebundene Flächengebilde erhältlich nach einem Verfahren gemäß einem der Ansprüche 1 bis 13 bzw. 14 bis 16.

Vliese gemäß der Erfindung, die man durch Herstellen eines Vlieses aus Wasserglasfasern und Binden der Wasserglasfasern und Umwandlung des Wasserglases in Kieselsäure und Dehydratisieren nach dem Trocknen erhalten hat, weisen vorzugsweise eine Reißlänge von 60 bis 300 m auf.

Ein weiterer Gegenstand der Erfindung ist die Verwendung der erfindungsgemäß hergestellten Flächengebilde zur Herstellung von Verbundkörpern.

Zur Durchführung des erfindungsgemäßen Verfahrens geht man von Wasserglasfasern aus, deren Herstellung an sich bekannt ist. Im Rahmen der Erfindung lassen sich insbesondere Wasserglasfasern vorteilhaft verwenden, wie sie nach der Lehre der DE-OS 29 00 990 hergestellt werden. Auf die Offenbarung in dieser Offenlegungsschrift wird sich hier ausdrücklich bezogen.

Bei dem in dieser Offenlegungsschrift beschriebenen Verfahren geht man von wäßrigen Wasserglaslösungen aus, die im wesentlichen frei von Nichtalkalimetallverbindungen sind und ein molares Verhältnis von $Na_2O : SiO_2$ von etwa 1 : 3 bis 1 : 1,9 aufweisen. Die nach dem in der DE-OS 29 00 990 offenbarten Verfahren hergestellten Wasserglasfasern weisen nach dem Verspinnen einen Wassergehalt von etwa 15 bis 30 % auf. Die so erhaltenen Fasern können direkt gemäß der Erfindung eingesetzt werden.

Es ist aber auch möglich, durch Trocknen den Wassergehalt dieser Fasern noch vor Einsatz bei dem erfindungsgemäßen Verfahren herabzusetzen, z.B. auf 18 bis 24 %.

Es hat sich herausgestellt, daß es vorteilhaft ist, die frisch gesponnenen Wasserglasfasern möglichst bald nach dem Spinnen gemäß der Erfindung zu verarbeiten und sie nicht zu lange dem Einfluß einer Atmosphäre zu überlassen, in der Bestandteile vorhanden sind, welche die erhaltenen Wasserglasfasern physikalisch und chemisch verändern können. So wirkt sich eine hohe relative Feuchtigkeit der Atmosphäre nachteilig auf die Verarbeitbarkeit im Rahmen der Erfindung aus. Ferner können die Fäden aus der Atmosphäre $CO_2$ aufnehmen, das mit dem Wasserglas der Fasern unter Carbonatbildung reagiert.

Werden deshalb die Wasserglasfasern nach dem Verspinnen nicht alsbald weiterverarbeitet, so ist es zweckmäßig, diese Fasern bei einer relativen Feuchtigkeit von höchstens 30 % zu lagern. Auf diese Weise wird erreicht, daß die Wasserglasfasern wenig oder kaum verändert werden.

Auch sollte bei der Verarbeitung der Wasserglasfasern darauf geachtet werden, daß die Feuchtigkeit der Umgebung nicht zu hoch ist, vorzugsweise maximal 60 % relative Feuchtigkeit beträgt. Sehr vorteilhaft ist es, wenn man die Wasserglasfasern unter Bedingungen von 30 % relativer Feuchtigkeit oder weniger, insbesondere bei einem Klima von 20 bis 30 % relativer Feuchtigkeit verarbeitet. Besonders vorteilhaft ist es, wenn man die Wasserglasfasern bei einem solchen Feuchtigkeitsgehalt in der Atmosphäre verarbeitet, welche dem Dampfdruck entspricht, unter welchem die Fasern auf Grund ihres eigenen Wassergehaltes stehen. Bei diesem Dampfdruck sind die Wasserglasfasern am stabilsten und am vorteilhaftesten zu verarbeiten. Der entsprechende Feuchtigkeitsgehalt der Luft läßt sich leicht mit einem handelsüblichen Feuchtemeßgerät bestimmen, wenn die Wasserglasfasern und die Umgebungsluft sich in einem geschlossenen System befinden, z.B. in einem geschlossenen Glasgefäß.

Wenn auch in einer Reihe von Fällen die Aufnahme von Feuchtigkeit aus der Atmosphäre die Verarbeitbarkeit der Wasserglasfasern nachteilig beeinflussen kann, so schadet ein Abgeben von Wasser im allgemeinen nicht, vielfach wird sogar durch Vortrocknen der Wasserglasfasern die Verarbeitbarkeit zum Flächengebilde verbessert.

Bei hohen Feuchtigkeiten, wie z.B. 60 % relativer Feuchtigkeit, sollten frisch gesponnene Fäden möglichst bald, vorzugsweise nicht später als 15 Minuten nach ihrer Verspinnung weiterverarbeitet werden.

Die Wasserglasfasern werden entweder in endloser Form oder auch als Stapelfasern zu Flächengebilden wie Geweben, Gewirken, Gelegen, Vliesen u.dgl. weiterverarbeitet.

So können Wasserglasfasern z.B. durch Krempeln mechanisch zu Vliesen verarbeitet werden. Es ist auch möglich, Wasserglasstapelfasern nach mechanischer Feinauflösung in einem Luftstrom zu transportieren und sie auf eine Unterlage zu einem Vlies abzulegen.

Vorzugsweise werden bei der Vliesherstellung Wasserglasstapelfasern jedoch in einem organischen Lösungsmittel dispergiert und nach Verfahren, wie sie bei der Technik zur Herstellung von Naßvliesen bekannt sind, zu einem Vlies weiterverarbeitet, indem man die Dispersion auf eine Unterlage z.B. einem Sieb ausbreitet.

Besonders vorteilhaft ist es, wenn man zur Vliesherstellung Wasserglasfasern als Stapelfasern, d.h. als Fasern von begrenzter Länge einsetzt. Die Länge der einsetzbaren Fasern kann in weiten Bereichen variieren. So ist es durchaus möglich, Fasern mit einer Länge von etwa 50 bis 100 $\mu$m bis zu 3 bis 4 cm einzusetzen.

Das Herstellen der Stapel kann auf übliche Weise durch Schneiden oder Reißen von Endlosfasern geschehen. Besonders geeignet ist auch die sogenannte Naßvermahlung, wobei die zunächst als Endlosfasern anfallenden Wasserglasfasern in mehr oder weniger lange Stücke geschnitten werden, diese in einer Flüssigkeit suspendiert werden und sodann mit einem rotierenden Messerkranz auf eine Stapellänge von beispielsweise im Mittel 100 bis 2000 $\mu$m gebracht werden. Als Flüssigkeit bei der Naßvermahlung eignen sich die Flüssigkeiten, in welchen die Fasern anschließend auf nassem Weg zu einem Vlies verarbeitet werden, z.B. Äthanol.

Bei der Verarbeitung von Endloswasserglasfasern (Filamente) zu Vliesen können diese auf an sich bekannte Weise durch Legen z.B. nach der Kreuzlegetechnik zu einem Vlies verarbeitet werden.

Die auf diese Weise hergestellten Flächengebilde werden sodann bei erhöhter Temperatur vzw. unter Druck, insbesondere unter 0,2 bis 2 bar gepreßt. Es wird dabei eine Temperatur gewählt, bei der die Fasern thermoplastisch sind. Dies ist allgemein bei Temperaturen von 60 bis 160°C der Fall. Beim Pressen werden insbesondere an den Kreuzungspunkten die Fasern auf Grund ihrer Thermoplastizität miteinander verbunden, sozusagen miteinander verschweißt. Dieses Verschweißen bewirkt einen sehr festen Zusammenhalt der einzelnen Fasern, so daß ein Flächengebilde mit hoher Festigkeit erhalten wird.

Die Herstellung von Geweben aus den Wasserglasfasern kann nach üblichen Methoden geschehen. Das Gewebe kann in den bekannten Bindungen wie z.B. Panama-oder Leinwandbindung hergestellt werden. Es versteht sich von selbst, daß Webverfahren, wie sie z.B. bei Wasserwebmaschinen angewandt werden, nicht bei der Verarbeitung von Wasserglasfasern angewandt werden, da das Wasser die Fasern auflösen würde.

Auch die Herstellung der Fadengelege aus Wasserglasfasern kann auf an sich übliche Weise geschehen,z.B. indem man Wasserglasfäden von Spulen einmal parallel nebeneinander verlegt, sodann weitere Wasserglasfäden im Winkel auf die erste Fadenlage aufbringt.

Es ist auch möglich, die Wasserglasfasern in an sich üblicher Weise durch Flechten zu einem Flächengebilde zu verarbeiten.

Weitere aus der Textiltechnik bekannte Verfahren zur Herstellung von textilen Flächengebilden sind anwendbar.

Es ist auch möglich, bei der Herstellung von textilen Flächengebilden andere anorganische Fasern mitzuverwenden. So kann man z.B. bei Geweben als Schuß Wasserglasfasern und als Kette Aluminiumoxidfasern, Glasfasern oder sonstige anorganische Fasern einsetzen.

Bei der Herstellung von Vliesen kann man auch direkt Gemische aus Wasserglasfasern und anderen, insbesondere an organischen Fasern einsetzen, wie z.B. Silikafasern, Aluminiumoxidfasern, Glasfasern u.dgl.

Die Durchmesser der eingesetzten Wasserglasfasern können in weiten Bereichen variieren. Bevorzugt werden Fasern mit einer Dicke von etwa 10 bis 14 $\mu$m.

Es ist jedoch auch möglich, sowohl gröbere Fasern z.B. mit einer Dicke von 20 $\mu$m als auch feinere Fasern mit einer Dicke bis zu 8 $\mu$m und darunter einzusetzen. Besonders Fasern mit niedrigen Dicken führen zu Vliesen mit sehr elastischen Eigenschaften. Bei gröberen Titern nimmt die Fasersprödigkeit zu, so daß derartige Flächengebilde nicht für alle Einsatzwecke geeignet sind.

Zum Pressen der Fasern können Walzen, Druckpressen u.dgl. dienen.

Das Verbinden der Fasern bei Temperaturen von 50° und mehr an den Berührungsstellen kann in vielen Fällen, insbesondere bei höheren Temperaturen, schon allein durch die Temperaturerhöhung geschehen. Bevorzugt wird jedoch während des Verbindens der Fasern ein Druck auf das Flächengebilde ausgeübt. Dadurch wird bewirkt, daß größere Berührungsflächen miteinander verschweißt werden und der physikalische Zusammenhalt des Flächengebildes noch stärker ausgebildet wird.

Das Ausüben eines Drucks ist besonders zu empfehlen, wenn es um die Herstellung von Vliesen geht, bei denen insbesondere Stapelfasern verhältnismäßig locker aufeinander liegen, ohne einen großen Druck aufeinander auszuüben. Auch bei der Herstellung von Gelegen ist ein Pressen oder Ausüben von Druck während der Herstellung des Flächengebildes zu empfehlen.

Bei Geweben hingegen ist die Anwendung von Druck weniger erforderlich, da die Fasern im Gewebe bereits auf Grund der Gewebekonstruktion an ihren Berührungsstellen unter einer gewissen Spannung stehen und somit aufeinander gepreßt werden. Das gleiche gilt auch für Gewirke.

Die auf diese Weise hergestellten Flächengebilde aus gebundenen Wasserglasfasern können im Rahmen der Erfindung durch Behandeln mit einer wäßrigen wasserstoffionenhaltigen Säure oder Salzlösung zu einem Flächengebilde aus gebundenen Kieselsäurefasern umgewandelt werden. Das Flächengebilde wird sodann gewaschen und getrocknet. Das erhaltene Flächengebilde besteht dann aus fest verbundenen Kieselsäurefasern, die eine hervorragende Haftung untereinander aufweisen; ein Einsatz von Bindemitteln ist nicht erforderlich.

Die auf diese Weise erhaltenen Flächengebilde können sodann bei Temperaturen von 600°C und mehr, insbesondere über 800°C dehydratisiert werden. Dabei tritt ein Schrumpfen ein,und es entstehen Flächengebilde mit hoher Dichte und Deckkraft sowie hervorragenden Festigkeiten und guten elektrischen Eigenschaften. Besonders bei Vliesen entstehen Flächengebilde mit sehr vorteilhafter Deckkraft.

Die Flächengebilde aus Wasserglasfasern können aber auch direkt eingesetzt werden ohne daß man sie in Kieselsäurefaserflächengebilde umwandelt. So lassen sich z.B. aus Wasserglasvliesen gemäß der Erfindung Filter für säurehaltige Gase herstellen. So können z.B. Spezialfilter für Gasmasken hergestellt werden, die benötigt werden, wenn man sich gegen Blausäuredämpfe schützen möchte. Es versteht sich von selbst, daß man in solchen Filtern, insbesondere wenn sie längere Zeit eingesetzt werden sollen, Vorfilter mitverwendet, welche verhindern, daß Wasserglasfaserfilter während ihres Einsatzes zu viel Feuchtigkeit aus der Atmosphäre aufnehmen und dadurch in ihrer Wirksamkeit herabgesetzt werden.

Die erfindungsgemäß hergestellten Flächengebilde lassen sich insbesondere zu Verbundstoffen weiterverarbeiten.

Bei der Herstellung von Vliesen gemäß der Erfindung unter Verwendung von organischen Flüssigkeiten stören geringere Wassergehalte vielfach nicht. Trotzdem sollten nach Möglichkeit Flüssigkeiten mit einem möglichst niedrigen Wassergehalt eingesetzt werden. Bevorzugt sollte der Wassergehalt weniger als 1 % betragen.

Weniger geeignet sind als Flüssigkeiten auch nichtalkalibeständige Verbindungen, z.B. solche, welche Estergruppen aufweisen. Ferner sind weniger geeignet Flüssigkeiten, die einen sehr niedrigen Siedepunkt aufweisen.

Vliese aus $SiO_2$-Fasern gemäß der Erfindung können als solche auf vielerlei Gebieten eingesetzt werden, z.B. als Isoliermaterial, wobei sie sich insbesondere durch ihre hohe thermische Stabilität bei Temperaturen bis zu 1200°C und darüber einsetzen lassen. Da sie einen äußerst hohen elektrischen Widerstand besitzen, eignen sie sich auch für alle Einsatzzwecke auf dem Gebiet der Elektrotechnik, wo es auf hohe Isolierwirkung und auch auf Temperaturbeständigkeit ankommt.

Besonders vorteilhaft lassen sich die erfindungsgemäß hergestellten Flächengebilde, insbesondere die Vliese zu sogenannten "Verbundstoffen" verarbeiten. Im Rahmen der Erfindung sind unter Verbundstoffe alle die Materialien zu verstehen, bei denen zwei oder mehrere Komponenten zu einem Körper verarbeitet werden, z.B. verstärkte Kunststoffe. Unter Verbundstoffe sind auch solche Stoffe zu verstehen, die durch Kaschieren von mehreren flächenförmigen Gebilden erhalten worden sind.

Insbesondere die erfindungsgemäß hergestellten Vliese lassen sich mit Duroplasten zu sogenannten Prepregs verarbeiten, aus denen nach Verformen und Härten auch größere Formteile zugänglich sind.

So lassen sich Vliese z.B. mit aushärtbaren Harzen, wie Epoxyharzen, ungesättigten Polyesterharzen und anderen Duroplasten imprägnieren und weiterverarbeiten. Diese Prepregs können dann in bekannter Weise zum fertigen Verbundstoff weiterverarbeitet werden. Es ist auch möglich, aus mehreren Lagen Schichtwerkstoffe herzustellen.

Gemäß der Erfindung lassen sich weiter Vliese herstellen, die sehr dünn sind und doch einen hervorragenden Zusammenhalt der Faser aufweisen, so daß das Vlies auch eine hohe Festigkeit besitzt. Bei der thermischen Dehydratisierung gemäß der Erfindung schrumpfen nämlich die Flächengebilde, insbesondere die Vliese erheblich. Die Einzelfasern der Vliese verfilzen dabei sehr stark, so daß die Deckkraft der Vliese stark verbessert wird.

Durch Mitverwendung von anderen Fasern lassen sich Flächengebilde, insbesondere Vliese mit besonders interessanten Eigenschaften herstellen.

Es war besonders überraschend, daß im Rahmen der Erfindung Flächengebilde herstellbar sind, die sich durch besonders hohe Festigkeiten auszeichnen, ohne daß ein Bindemittel eingesetzt werden muß. So sind Festigkeiten zu erzielen, welche die Reißlängen von beispielsweise Vliesen, welche durch übliches Verfahren von Silikafasern erzielt werden, erheblich übertreffen; es sind Reißlängen bis zu 200 Meter und mehr zu erzielen. Geeignete Vliese weisen Reißlängen von bis zu 270 und sogar von 300 Meter und mehr auf.

Auch die Herstellung von Verbundkörpern ist einfach durchzuführen und kann auf die verschiedensten Arten und Weisen geschehen, z.B. daß man Vliese in Form von Matten zusammen mit Duroplasten zu Verbundwerkstoffen verarbeitet. Das Vlies wirkt hier als Verstärkung im Werkstoff.

In ähnlicher Weise können auch Gewebe, Gelege oder sonstige gebundene Flächengebilde zu Verbundkörpern verarbeitet werden.

Die Erfindung wird durch folgende Beispiele näher erläutert:

Beispiel 1

Gemäß Beispiel 6 der DE-PS 29 00 990 werden durch Trockenverspinnen einer Wasserglasspinnmasse unter Einsatz von 150 kg Natronwasserglas 39° Be, Molverhältnis $Na_2O/SiO_2$ = 1/3,38, und 5,84 kg NaOH Wasserglasfasern hergestellt. Diese Wasserglasfasern werden auf eine Länge von 6 mm geschnitten und als eine 0,1%ige Dispersion in Äthanol auf eine siebförmige Unterlage gebracht. Zur Verschweißung der Wasserglasfasern wurden die Vliese nach Abtrocknung des Äthanols 2 min bei 85°C unter einem Druck von 0,5 bar gepreßt und anschließend sofort in 3 n HCl geleitet, wobei das Natriumsilikat in Kieselsäure umgewandelt wurde. Das Vlies wird sodann mit Wasser gewaschen, getrocknet und anschließend bei 800°C 10 min dehydratisiert. Es wird ein Vlies mit einem Flächengewicht von 50 g/m² und einer Reißlänge von 80 m erhalten. Das Vlies ist sehr glatt und weist ein pergamentpapierartiges Aussehen auf.

Beispiele 2 bis 3

In gleicher Weise wie in Beispiel 1 werden zunächst 6 mm lang geschnittene Wasserglasfasern hergestellt, sodann in einem Gewichtsverhältnis von 6 : 1 bzw. 2 : 1 mit 6. mm langen Kieselsäurefasern, hergestellt nach Beispiel 5 der DE-PS 29 00 900 vermischt und als 1 %ige Dispersion in Äthanol zu einem Vlies verarbeitet. Die Eigenschaften der erhaltenen verschweißten Vliese sind in der nachfolgenden Tabelle zusammengefaßt:

Tabelle

| Beispiel Nr. | Gewichtsverhältnis Wasserglasfasern zu Kieselsäurefasern | Flächengewicht g/m² | Reißlänge |
|---|---|---|---|
| 2 | 6 : 1 | 45 | 65 |
| 3 | 2 : 1 | 40 | 60 |

**Ansprüche**

1. Verfahren zur Herstellung von gebundenen Flächengebilden wie Geweben, Gelegen, Vliesen o.dgl. aus anorganischen Fasern, dadurch gekennzeichnet, daß man Wasserglasfasern zu einem Gewebe, Gelege, Vlies o.dgl. verarbeitet und die Fasern durch eine Wärmebehandlung bei Temperaturen von mindestens 50°C an den Berührungsstellen miteinander verbindet.

2. Verfahren nach Anspruch 1, dadurch gekennzeichnet, daß man die Fasern durch eine Wärmebehandlung bei Temperaturen von 60 bis 160°C miteinander verbindet.

3. Verfahren nach einem der Ansprüche 1 bis 2, dadurch gekennzeichnet, daß man trockengesponnene Wasserglasfasern verwendet.

4. Verfahren nach einem der Ansprüche 1 bis 3, dadurch gekennzeichnet, daß man frisch gesponnene Wasserglasfasern verwendet.

5. Verfahren nach einem der Ansprüche 1 bis 4, dadurch gekennzeichnet, daß man Wasserglasfasern mit einem Wassergehalt von 15 bis 30 % verwendet.

6. Verfahren nach Anspruch 5, dadurch gekennzeichnet, daß man Wasserglasfasern mit einem Wassergehalt von 18 bis 24 % verwendet.

7. Verfahren nach einem der Ansprüche 1 bis 6, dadurch gekennzeichnet, daß man endlose Wasserglasfasern durch Legen zu einem Vlies verarbeitet.

8. Verfahren nach einem der Ansprüche 1 bis 6, dadurch gekennzeichnet, daß man Wasserglasstapelfasern als Dispersion in einer organischen Flüssigkeit auf nassem Wege zu einem Vlies verarbeitet.

9. Verfahren nach Anspruch 8, dadurch gekennzeichnet, daß man organische Flüssigkeiten mit einem Wassergehalt von weniger als 1 % verwendet.

10. Verfahren nach einem der Ansprüche 8 bis 9, dadurch gekennzeichnet, daß man als Flüssigkeit einen Alkohol verwendet.

11. Verfahren nach Anspruch 10, dadurch gekennzeichnet, daß man als Alkohol Äthanol verwendet.

12. Verfahren nach einem der Ansprüche 1 bis 11, dadurch gekennzeichnet, daß man die Wasserglasfasern durch Pressen bei Drucken von 0,2 bis 2 bar miteinander verbindet.

13. Verfahren nach einem der Ansprüche 1 bis 12, dadurch gekennzeichnet, daß man Wasserglasfasern in Mischung mit anderen anorganischen Fasern verarbeitet.

14. Verfahren zur Herstellung von gebundenen Flächengebilden wie Geweben, Gelegen, Vliesen o.dgl. aus anorganischen Fasern, dadurch gekennzeichnet, daß man Wasserglasfasern nach einem Verfahren nach einem der Ansprüche 1 bis 13 zu einem Gewebe, Gelege, Vlies o.dgl. verarbeitet und die Fasern an den Berührungsstellen miteinander verbindet, das gebundene Flächengebilde zwecks Umwandlung des Wasserglases in Kieselsäure mit Säure behandelt, wäscht und trocknet.

15. Verfahren nach Anspruch 14, dadurch gekennzeichnet, daß man das Flächengebilde nach dem Waschen bei Temperaturen über 600°C dehydratisiert.

16. Verfahren nach Anspruch 15, dadurch gekennzeichnet, daß man bei Temperaturen über 800°C dehydratisiert.

17. Gebundene Flächengebilde hergestellt nach einem Verfahren gemäß einem der Ansprüche 1 bis 13.

18. Gebundene Flächengebilde hergestellt nach einem Verfahren gemäß einem der Ansprüche 14 bis 16.

19. Gebundene Flächengebilde in Form von Vliesen nach Anspruch 18, gekennzeichnet durch eine Reißlänge von 60 bis 300 m.

20. Verwendung der Flächengebilde nach einem der Ansprüche 18 bis 19 zur Herstellung von Verbundkörpern.